# EUROPÄISCHE PATENTSCHRIFT

(11) **EP 2 296 962 B1**
(45) Veröffentlichungstag und Bekanntmachung des Hinweises auf die Patenterteilung: **16.11.2011**
(21) Anmeldenummer: 09720755.9
(22) Anmeldetag: 10.03.2009
(51) Int. Cl.: B63H 21/14, F17C 9/02, F04B 41/02, F04B 41/06, F17C 9/04, F04B 25/00

(54) **VORRICHTUNG UND VERFAHREN ZUM BEREITSTELLEN VON ERDGASBRENNSTOFF**
DEVICE AND METHOD FOR PREPARING LIQUEFIED NATURAL GAS (LNG) FUEL
PROCÉDÉ ET DISPOSITIF DE PRODUCTION DE COMBUSTIBLE GAZ NATUREL

(30) Priorität: 10.03.2008 EP 08102472; 19.03.2008 EP 08102786
(43) Veröffentlichungstag der Anmeldung: 23.03.2011
(73) Patentinhaber: Burckhardt Compression AG, 8404 Winterthur (CH)
(72) Erfinder: FEJZULI, Besim, 8307 Effretikon (CH)
(74) Vertreter: Dr. Graf & Partner AG
(86) Internationale Anmeldenummer: PCT/EP2009/052766
(87) Internationale Veröffentlichungsnummer: WO 2009/112479

(56) Entgegenhaltungen:
- EP-A- 1 348 620
- DE-A1- 2 155 335
- DE-A1- 2 216 736
- DE-B- 1 085 642
- DE-B- 1 195 427
- US-A- 3 285 503
- US-A- 5 711 270

## Beschreibung

Die Erfindung betrifft eine Vorrichtung sowie ein Verfahren zum Bereitstellen von Erdgasbrennstoff.

### Stand der Technik

Flüssiges Erdgas, im Englischen auch als "Liquefied natural gas" oder kurz als "LNG" bezeichnet, ist Erdgas, welches auf eine Temperatur von -162 °C abgekühlt wurde, und dadurch einen flüssigen Zustand angenommen hat. Heute ist eine Vielzahl von Erdgasquellen bekannt, welche sich leider sehr weit entfernt vom Endverbraucher befinden. Eine günstige Möglichkeit Erdgas über weite Strecken zu transportieren besteht darin, das Erdgas zu verflüssigen und in Tankschiffen, auch als LNG-Tanker bezeichnet, zu transportieren. Am Zielort wird das flüssige Ergas wieder in gasförmiges Erdgas verwandelt.

Die Druckschrift WO 2006/077094 offenbart sowohl eine gattungsgemäße Vorrichtung als auch ein Verfahren, die es ermöglichen das von LNG-Tankern transportierte Erdgas als Brennstoffquelle zu nutzen, um die Maschinen des LNG-Tankers mit diesem Brennstoff anzutreiben. Wie in der Druckschrift ausführlich beschrieben bildet sich im oberen Bereich eines Speicherbehälters, der verflüssigtes Erdgas enthält, ein Abdampfgas, im Englischen als "Boil-off gas" bezeichnet. Dieses Abdampfgas wird dem Speicherbehälter entnommen, danach komprimiert, und anschliessend als gasförmiges Erdgas einer Maschine auf dem Schiff, beispielsweise einem Verbrennungsmotor, zugeführt.

Das Dokument DE 11 95 427 offenbart einen dreistufigen Hochdruckgaskompressor. Dieser Hochdruckgaskompressor ist nicht geeignet zur Versorgung eines Verbrennungsmotors mit Abdampfgas eines LNG-Speicherbehälters. Das Dokument US 5 711 270 offenbart ein Verfahren zur Bereitstellung von Erdgasbrennstoff für einen Verbrennungsmotor, wobei das Abdampfgas einem flüssiges Erdgas enthaltenden LNG-Speicherbehälter entnommen wird. Dieses Verfahren weist den Nachteil auf, dass die für den Betrieb des Verbrennungsmotors bereitgestellte Menge an Erdgasbrennstoff nicht optimal ist.

### Darstellung der Erfindung

Aufgabe der vorliegenden Erfindung ist es eine vorteilhaftere Vorrichtung sowie ein vorteilhafteres Verfahren vorzuschlagen, welche es erlauben aus dem Abdampfgas von verflüssigtem Erdgas einen Brennstoff zu gewinnen, der insbesondere zur Verwendung in Verbrennungsmotoren von LNG-Tankern geeignet ist.

Die Aufgabe wird gelöst mit einer Vorrichtung aufweisend die Merkmale von Anspruch 1. Die Unteransprüche 2 bis 8 beziehen sich auf weitere, vorteilhafte Ausgestaltungen der erfindungsgemässen Vorrichtung. Die Aufgabe wird weiter gelöst mit einem Verfahren aufweisend die Merkmale von Anspruch 9. Die Unteransprüche 10 bis 15 beziehen sich auf weitere, vorteilhafte Ausgestaltungen des erfindungsgemässen Verfahrens.

Die Aufgabe wird insbesondere gelöst mit einer Vorrichtung zum Bereitstellen von Erdgasbrennstoff umfassend einen Kompressor mit einem Einlass für einen Erdgasstrom, wobei der Einlass Fluid leitend mit einem LNG-Speicherbehälter verbindbar ist, um Abdampfgas aus dem LNG-Speicherbehälter zuzuführen, und einem Auslass der Fluid leitend mit einer Erdgasversorgungsleitung verbindbar ist, wobei der Kompressor eine erste und nachfolgend eine zweite Kompressionsstufe umfasst, wobei die erste und die zweite Kompressionsstufe als Labyrinth gedichtete Kolbenverdichter oder einem mit Kolbenringen gedichteten Kolbenverdichter ausgestaltet sind, und wobei die erste Kompressionsstufe einen grösseren Kolbendurchmesser aufweist als die zweite Kompressionsstufe, und wobei der Kompressor nachfolgend zumindest eine dritte Kompressionsstufe umfasst, welche als Kolbenring gedichteter Kolbenverdichter oder als Labyrinth gedichteter Kolbenverdichter ausgestaltet sind. In einer weiteren vorteilhaften Ausgestaltung ist der dritten Kompressionsstufe nachfolgen eine vierte Kompressionsstufe nachgeordnet. In einer weiteren vorteilhaften Ausgestaltung ist der vierten Kompressionsstufe eine fünfte Kompressionsstufe nachgeordnet. In einer besonders vorteilhaften Ausgestaltung ist die dritte, und falls vorhanden auch die vierte und fünfte Kompressionsstufe als Kolbenring gedichtete Kompressionsstufe ausgestaltet. In einer weiteren vorteilhaften Ausgestaltung ist die dritte, und falls vorhanden auch die vierte und fünfte Kompressionsstufe als Labyrinth gedichtete Kompressionsstufe ausgestaltet. In einer weiteren vorteilhaften Ausgestaltung sind alle Kompressionsstufen entweder als Labyrinth gedichtete Kompressionsstufe oder als mit Kolbenringen gedichtete Kompressionsstufe ausgestaltet. In einer besonders vorteilhaften Ausgestaltung sind die erste und die zweite Kompressionsstufe als Labyrinth gedichtete Kolbenverdichter und die nachfolgenden Kompressionsstufen als mit Kolbenringen gedichtete Kolbenverdichter ausgestaltet.

Die erfindungsgemässe Vorrichtung weist den Vorteil auf, dass aus dem flüssigen Erdgas ein Erdgasstrom erzeugbar ist, der einen Druck zwischen 100 Bar und 500 Bar aufweist, insbesondere einen Druck zwischen 150 Bar und 300 Bar, wobei der Erdgasstrom zur Brennstoffversorgung eines Verbrennungsmotors dient, vorzugsweise einer Turbine oder eines Kolbenmotors wie eines Dieselmotors. Die erfindungsgemässe Vorrichtung ist vorzugsweise auf einem Schiff, insbesondere auf einem LNG-Tanker angeordnet, und ermöglicht es den Brennstoff zur Versorgung der Verbrennungsmotoren aus dem in den LNG-Speicherbehältern gelagerten, flüssigen Erdgas zu beziehen. Das Abdampfgas des flüssigen Erdgases weist üblicherweise eine Temperatur von etwa minus 162 °C auf sowie einen Druck von üblicherweise 1 Bar. Die erfindungsgemässe Vorrichtung erlaubt es dieses Abdampfgas auf einen vorzugsweise variablen Enddruck im Bereich zwischen 100 Bar und 500 Bar zu verdichten, insbesondere auf einen Enddruck zwischen 150 Bar und 300 Bar.

Der Labyrinth gedichtete Kolbenverdichter weist den Vorteil auf, dass dieser Erdgas in einem weiten Temperaturbereich von vorzugsweise zwischen -160 °C bis + 100 °C ansaugen und verdichten kann. Der Kolbenring gedichtete Kolbenverdichter weist den Vorteil auf, dass dieser Erdgas auf einen hohen Druck verdichten kann. Die erfindungsgemässe Kombination von Labyrinth gedichtetem Kolbenverdichter und Kolbenring gedichtetem Kolbenverdichter weist den Vorteil auf, dass ein sehr zuverlässiges und kostengünstiges Verdichten von Erdgas, ausgehend von einem Abdampfgas möglich ist, was es insbesondere ermöglicht den Motor eines LNG-Tankers mit Brennstoff aus den transportierten LNG-Speicherbehältern zu versorgen.

In einer bevorzugten Ausgestaltung ist zwischen der zweiten und dritten Kompressionsstufe ein Rückschlagventil angeordnet, wobei in der ersten und zweiten Kompressionsstufe vorzugsweise ölfrei verdichtet wird. Diese Anordnung weist den Vorteil auf, dass das in der ersten und zweiten Kompressionsstufe komprimierte Erdgas keine Verunreinigungen aufweist und, falls erforderlich, wieder dem LNG-Speicherbehälter zugeführt werden kann. Die zweite Kompressionsstufe besteht vorteilhafterweise aus einer einzigen Verdichterstufe oder aus zwei in Serie geschalteten Verdichterstufen, beziehungsweise aus einem Kolbenverdichter oder aus zwei in Serie geschalteten Kolbenverdichtern.

In einer besonders bevorzugten Ausgestaltung sind alle Kompressionsstufen auf einem gemeinsamen Gehäuse angeordnet und von einem gemeinsamen Kurbeltriebwerk angetrieben. Dies ergibt einen sehr kompakten Kompressor, der auch auf einem Schiff angeordnet werden kann. In einer bevorzugten Ausgestaltung weist das Kurbeltriebwerk Kompensationsgewichte auf, um einen besonders hohe Laufruhe des Kompressors zu erzielen, was insbesondere bei einem Betrieb auf einem Schiff vorteilhaft ist.

In einer weiteren vorteilhaften Ausgestaltung weist zumindest eine der Kompressionsstufen einen Bypass mit ansteuerbarem Ventil auf, um den Rückfluss anzusteuern, und damit die Fördermenge und/oder den Förderdruck der Kompressionsstufe anzusteuern.

Die Erfindung wird nachfolgend an Hand von Ausführungsbeispielen im Detail erläutert. Grundsätzlich sind in den Zeichnungen gleiche Teile mit gleichen Bezugszeichen versehen.

### Kurze Beschreibung der Zeichnungen

Die zur Erläuterung der Ausführungsbeispiele verwendeten Zeichnungen zeigen:
- Fig. 1: schematisch ein Ausführungsbeispiel eines Kompressors;
- Fig. 2: schematisch ein weiteres Ausführungsbeispiel eines Kompressors;
- Fig. 3: schematisch eine Weiterbildung des in Figur 2 dargestellten Kompressors;
- Fig. 4: einen Schnitt durch einen Kompressor;
- Fig. 5: eine Detailansicht des in Figur 4 dargestellten Kompressors;
- Fig. 6: eine weitere Detailansicht des in Figur 4 dargestellten Kompressors;
- Fig. 7: schematisch zwei parallel angeordnete Kompressoren zur Versorgung von zwei Dieselmotoren;
- Fig. 8: einen Temperaturverlauf des Erdgases in Abhängigkeit der Zeit;
- Fig. 9: ein Regelungskonzept zum Regeln von Druck und Massenstrom des komprimierten Erdgases;
- Fig. 10: einen Längsschnitt durch einen Kreuzkopf mit Ausgleichsmasse;
- Fig. 11: eine Seitenansicht eines Kreuzkopfes mit Ausgleichsmasse.

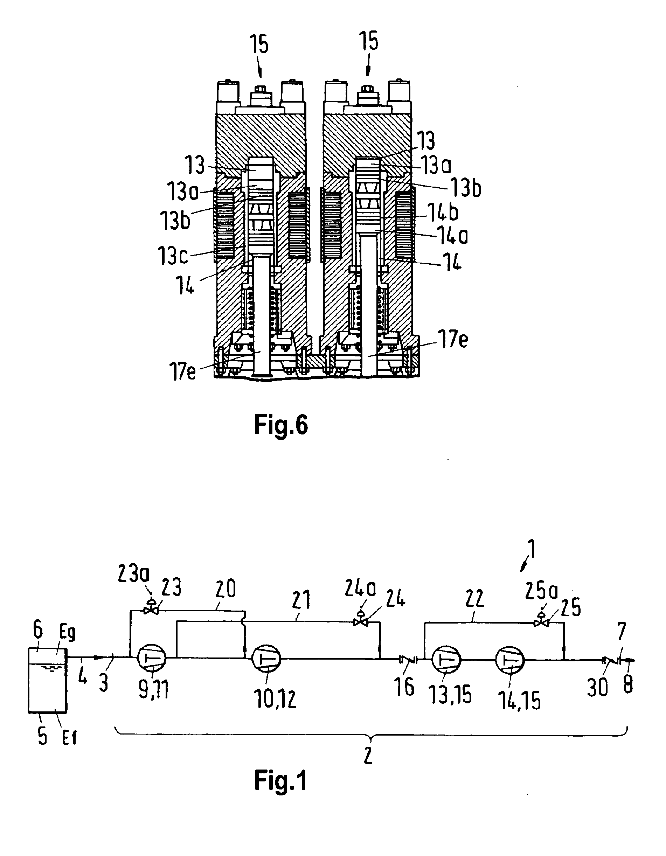

Figur 1 zeigt schematisch eine Vorrichtung 1 zum Bereitstellen von Erdgasbrennstoff umfassend einen Kompressor 2 mit einem Einlass 3 für einen Erdgasstrom 4 sowie umfassend einen Auslass 7, der Fluid leitend mit einer Erdgasversorgungsleitung 8 für einen nachgelagerten Verbrennungsmotor verbunden ist. Der Einlass 3 ist Fluid leitend mit einem LNG-Speicherbehälter 5 verbindbar, in welchem flüssiges Erdgas Ef gelagert ist, üblicherweise bei einem Druck von 1 Bar und einer Temperatur von minus 162°C. Oberhalb des flüssigen Erdgases Ef bildet sich gasförmiges Erdgas Eg aus, auch als Abdampfgas 6 bezeichnet. Dieses Abdampfgas 6 wird vom Kompressor 2 angesaugt, verdichtet, und verlässt den Kompressor 2 am Auslass 7 als Erdgas unter einem Druck von vorzugsweise zwischen 150 Bar und 300 Bar. Der Kompressor 2 ist vorzugsweise auf einem LNG-Tanker angeordnet, wobei das verdichtete Erdgas vorzugsweise als Brennstoff für den Antriebsmotor dient.

Der Kompressor 2 umfasst eine erste und nachfolgend eine zweite Kompressionsstufe 9,10, wobei die erste und die zweite Kompressionsstufe 9,10 als Labyrinth gedichtete Kolbenverdichter 11,12 ausgestaltet sind, und wobei die erste Kompressionsstufe 9 einen grösseren Kolbendurchmesser aufweist als die zweite Kompressionsstufe 10. Der Kompressor 2 umfasst nachfolgend eine dritte und vierte Kompressionsstufe 13,14, welche als Kolbenring gedichtete Kolbenverdichter 15 ausgestaltet sind. Danach wird das verdichtete Erdgas dem Auslass 7 zugeleitet.

In einer vorteilhaften Ausgestaltung ist zwischen der zweiten Kompressionsstufe 10 und der dritten Kompressionsstufe 13 ein Rückschlagventil 16 angeordnet, sodass das Erdgas nur in eine Richtung fliessen kann. In einer vorteilhaften Ausgestaltung sind alle in Flussrichtung des Erdgases vor dem Rückschlagventil 16 angeordneten Kompressionsstufen 9,10 ölfrei ausgestaltet, sodass das in diesem Abschnitt verdichtete Erdgas nicht durch Fremdstoffe verunreinigt wird. Der in Figur 1 dargestellte Kompressor 2 umfasst somit vier in Serie geschaltete Kolbenverdichter 11, 12, 15.

In einer vorteilhaften Ausgestaltung weist zumindest eine der Kompressionsstufen 9,10,13,14 einen Bypass 20,21,22 mit einem z.B. über eine elektrische Leitung 23a,24a,25a ansteuerbaren Ventil 23,24,25 auf. Ein Vorteil dieser Anordnung ist darin zu sehen, dass damit der Druck und/oder die Fördermenge des am Auslass 7 anstehenden oder durchfliessenden Erdgases geregelt werden kann.

Die in Figur 1 dargestellte Ausführungsform weist jeweils zwei in Serie geschaltete Kompressionsstufen 9,10 beziehungsweise 13,14 auf. Die Vorrichtung 1 könnte jedoch auch derart ausgestaltet sein, dass die beiden Kompressionsstufen 9,10 und/oder 13,14 durch jeweils eine einzige Kompressionsstufe ausgebildet ist, oder dass drei in Serie geschaltete Kompressionsstufen an Stelle der jeweils zwei dargestellten verwendet werden. Die in Figur 1 dargestellte Ausführungsform könnte auch nur einen einzigen Kolbenverdichter 15 aufweisen, oder auch drei in Serie geschaltete Kolbenverdichter 15.

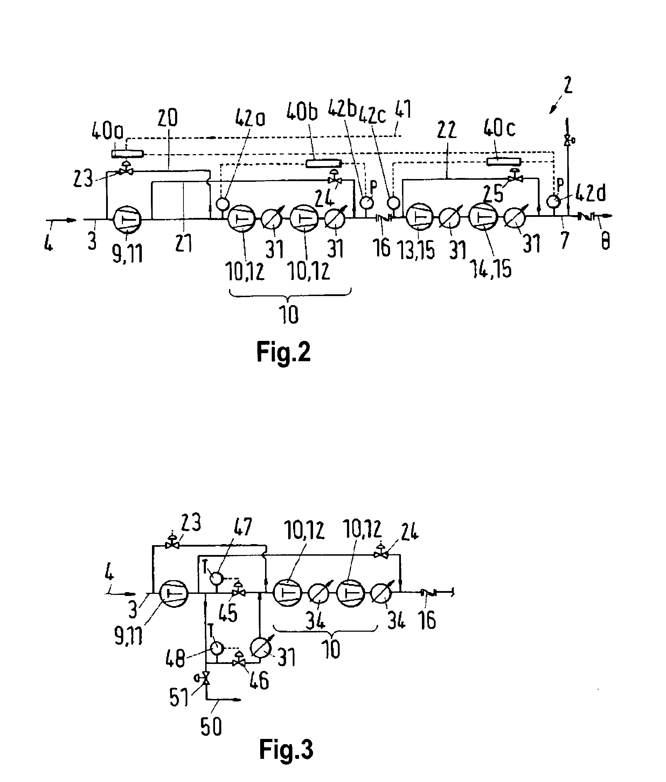

In einer weiteren vorteilhaften, in Figur 2 dargestellten Ausgestaltung kann der Kompressor 2, im Vergleich zu der in Figur 1 dargestellten Ausgestaltung, noch zusätzliche Kolbenverdichter 11, 12, 15 umfassen, welche zusätzliche, in Serie geschaltete Verdichterstufen ausbilden, um einen höheren Enddruck zu erzielen, oder welche parallel geschaltete Verdichterstufen ausbilden, um eine grössere Fördermenge zu erzielen, oder welche sowohl in Serie als auch parallel geschaltete Verdichterstufen aufweisen. So könnte beispielsweise die erste Kompressionsstufe 9 aus zwei parallel geschalteten Kolbenverdichtern 11 bestehen, um die Fördermenge zu erhöhen. Die zweite Kompressionsstufe 10 besteht in einer bevorzugten Ausgestaltung wie in Figur 2 dargestellt aus zwei Verdichterstufen, indem zwei Kolbenverdichter 12 in Serieschaltung nacheinander angeordnet sein, um den Kompressionsdruck zu erhöhen. Die Notwendigkeit einer zusätzlichen Verdichterstufe in der ersten oder zweiten Kompressionsstufe 9,10 ist insbesondere dann gegeben, wenn der Ansaugdruck relativ tief ist. Zudem könnte auch die dritte und vierte Kompressionsstufe 13,14 beispielsweise zumindest einen zusätzlichen in Serie geschalteten Kolbenverdichter 15 aufweisen, um den Enddruck des Erdgases zu erhöhen. Der erfindungsgemässe Kompressor 2 kann somit auf unterschiedliche Weise ausgestaltet sein, abhängig von den vorgegebenen oder erwünschten Eigenschaften des Erdgases am Einlass 3 und am Auslass 7, insbesondere Temperatur, Druck und erforderliche Fördermenge des Erdgases. Der in Figur 2 dargestellte Kompressor 2 zeigt eine bevorzugte Ausführungsform mit fünf in Serie geschalteten Kolbenverdichtern 11, 12, 15.

Der in Figur 2 dargestellte Kompressor 2 umfasst eine Mehrzahl von Drucksensoren 42a, 42b, 42c, 42d zum Messen des Erdgasdruckes an der jeweiligen Stelle. Der Kompressor 2 umfasst zudem drei Regelvorrichtungen 40a, 40b, 40c. Im dargestellten Ausführungsbeispiel ist der Regelvorrichtung 40a ein Drucksollwert 41 vorgegeben, wobei als Istwert der Enddruck 42d des Erdgases im Bereich des Auslasses 7 gemessen wird. Abhängig von der Differenz zwischen Istwert und Sollwert beeinflusst die Regelvorrichtung 40a die Stellung des Ventils 23, um dadurch den Rückflussstrom im Bypass 20 zu beeinflussen. Ebenso vergleicht die Regelvorrichtung 40b den Druck 42a, 42b vor und nach der zweiten Kompressionsstufe 10, und die Regelvorrichtung 40c den Druck 42c, 42d vor und nach der dritten und vierten Kompressionsstufe 13,14, um basierend auf diesen gemessenen Werten die Stellung des Ventils 24 bzw. 25 zu beeinflussen und dadurch den Rückflussstrom im Bypass 21 und 22 zu beeinflussen. Die Regelvorrichtungen 40a, 40b, 40c könnten zudem noch mit einer übergeordneten Regelung verbunden sein. Es kann sich, wie in Figur 2 dargestellt, als vorteilhaft erweisen nach den Kompressionsstufen 10, 13, 14 Kühler 31 anzuordnen, um das komprimierte Erdgas zu kühlen. Der Kühler 31 ist beispielsweise mit einem Wasser-Glykol-Gemisch gekühlt.

Figur 3 zeigt den links des Rückschlagventils 16 angeordneten Teil des bereits in Figur 2 dargestellten Kompressor 2 in einer weiteren, vorteilhaften Ausführungsform. Zwischen der ersten und zweiten Kompressionsstufe 9,10 sind ein Temperatursensor 47 sowie ein Regelventil 45 angeordnet. Zudem sind als Bypass zum Regelventil 45 ein Regelventil 46, ein Temperatursensor 48 sowie ein Kühler 31 angeordnet. Das die erste Kompressionsstufe 9 verlassende Erdgas kann somit, abhängig von dessen Temperatur, entweder über das Regelventil 45 direkt der zweiten Kompressionsstufe 10 zugeführt werden, oder über das Regelventil 46 und den Kühler 31 als gekühltes Erdgas der zweiten Kompressionsstufe 10 zugeführt werden. Der Kompressor 2 kann zudem eine Rückspeiseleitung 50 umfassen, deren Durchfluss von einem Schliessventil 51 kontrolliert wird, wobei die Rückspeiseleitung 50 wie dargestellt vorzugsweise links beziehungsweise in Flussrichtung des Erdgases dem Rückschlagventil 16 vorgelagert angeordnet ist. Die Rückspeiseleitung 50 kann einer Rückverflüssigungsvorrichtung zugeleitet sein, sodass das überflüssige Erdgas beispielsweise wieder dem LNG-Speicherbehälter 5 zugeführt werden kann. Die Rückspeiseleitung 50 könnte auch in eine Gasverbrennungsvorrichtung münden, wo das Erdgas beispielsweise abgefackelt wird.

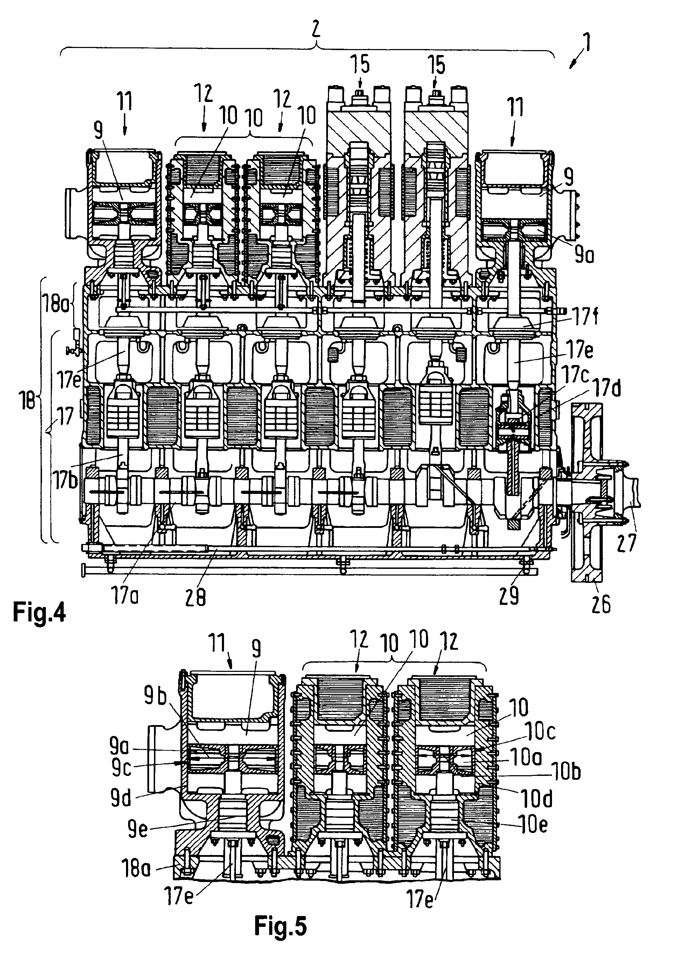

Figur 4 zeigt in einem Schnitt ein Ausführungsbeispiel eines erfindungsgemässen Kompressors 2 im Detail. Der Kompressor 2 umfasst ein gemeinsames Gehäuse 18 mit einem Kurbeltriebwerk 17 und einem Distanzteil 18a. Das Kurbeltriebwerk 17 umfasst eine darin gelagerte Kurbelwelle 17a, sowie sechs in Verlaufsrichtung der Kurbelwelle 17a beabstandet angeordnete, mit der Kurbelwelle 17a über Schubstangen 17b verbundene Kreuzköpfe 17c, wobei das Kurbeltriebwerk 17 Kreuzkopfbohrungen 17d aufweist, in welchen die Kreuzköpfe 17c geführt sind, wobei jeder Kreuzkopf 17c mit einer Kolbenstange 17e verbunden ist, und wobei jede Kolbenstange 17e mit einem Kolben 9a, 10a, 13a, 14a verbunden ist. Die Kurbelwelle 17a ist über eine Schwungmasse 26 mit einer Antriebswelle 27 verbunden. Das Distanzteil 18a weist oben eine Auflagefläche auf, an welcher im dargestellten Ausführungsbeispiel sechs Kolbenverdichter 11,12,15 angeordnet sind, deren Kolben 9a,10a,13a,14a über Kolbenstangen 17e von der gemeinsamen Kurbelwelle 17a angetrieben sind. Die Figuren 5 und 6 zeigen die Kolbenverdichter 11,12,15 im Detail. Der Kompressor 2 umfasst eine erste Kompressionsstufe 9 mit zwei Kolbenverdichtern 11, welche als Labyrinth gedichtete Kolbenverdichter 11 ausgestaltet sind, wobei die Kolbenverdichter 11 der Kompressionsstufe 9, wie in Figur 5 im Detail dargestellt, einen Kolben 9a mit Kolbendurchmesser 9b umfasst, wobei der Kolben 9a an der äusseren zylinderförmigen Oberfläche Labyrinthdichtungen 9c aufweist, beziehungsweise eine Oberflächenstruktur, die im Zusammenhang mit der Zylinderwand 9d eine berührungslose Labyrinthdichtung 9c bewirkt. Der Kolbenverdichter 11 umfasst zudem eine Kolbenstangenführung 9e um die Kolbenstange 17e und den Kolben 9a zu führen. Die beiden links und rechts angeordneten Kolbenverdichter 11 können bezüglich dem zu komprimierenden Erdgas gegenseitig parallel oder in Serie angeordnet sein. Die erste Kompressionsstufe 9 weist in einer vorteilhaften Ausgestaltung einen doppeltwirkenden Zylinder auf, indem beide Seiten des Kolbens 9a einen Verdichtungsraum zum Verdichten des Erdgases begrenzen. Die erste Kompressionsstufe 9 ist vorzugsweise in einer Tieftemperaturbauart ausgestaltet, und aus einem für tiefe Temperaturen geeigneten Material gefertigt.

Der Kompressor 2 umfasst eine zweite Kompressionsstufe 10 bestehend aus zwei in Serie geschalteten Kolbenverdichtern 12, welche ebenfalls als Labyrinth gedichtete Kolbenverdichter 12 ausgestaltet sind, wobei jeder Kolbenverdichter 12 der zweiten Kompressionsstufe 10, wie in Figur 5 im Detail dargestellt, einen Kolben 10a mit Kolbendurchmesser 10b umfasst, wobei der Kolben 10a an der äusseren zylinderförmigen Oberfläche Labyrinthdichtungen 10c aufweist, beziehungsweise eine Oberflächenstruktur, die im Zusammenhang mit der Zylinderwand 10d eine berührungslose Labyrinthdichtung 10c bewirkt. In einer weiteren Ausführungsform könnten die Labyrinthdichtungen auch an der Zylinderwand 10d angeordnet sein, und der Kolben 10a eine relativ glatte Oberfläche aufweisen. Die zweite Kompressionsstufe 10 umfasst zudem eine Kolbenstangenführung 10e um die Kolbenstange 17e und den Kolben 10a zu führen. Die beiden nebeneinander angeordneten Kolbenverdichter 12 sind bezüglich des zu komprimierenden Erdgases vorzugsweise in Serie angeordnet. Die erste Kompressionsstufe 9 weist einen grösseren Kolbendurchmesser 9b auf als die zweite Kompressionsstufe 10 mit Kolbendurchmesser 10b.

Der Kompressor 2 umfasst zwei Kolbenring gedichtete Kolbenverdichter 15, wobei jeder Kolbenverdichter 15 als doppeltwirkender Zylinder ausgestaltet ist und zwei Kompressionsstufen aufweist, eine dritte Kompressionsstufe 13 sowie eine vierte Kompressionsstufe 14, wobei wie in Figur 6 im Detail dargestellt, die dritte Kompressionsstufe 13 einen Kolben 13a mit einer Mehrzahl von Kolbenringen 13b sowie einen Zylinder 13c aufweist, und wobei die vierte Kompressionsstufe 14 einen Kolben 14a mit einer Mehrzahl von Kolbenringen 14b sowie einen Zylinder 14c aufweist. Im dargestellten Ausführungsbeispiel ist die dritte Kompressionsstufe 13 an der Kolbenoberseite angeordnet, wogegen die vierte Kompressionsstufe 14 an der Kolbenunterseite angeordnet ist. In einem weiteren, nicht dargestellten Ausführungsbeispiel könnte die dritten Kompressionsstufe 13 auch auf der Kolbenunterseite und die vierte Kompressionsstufe 14 auf der Kolbenoberseite angeordnet sein. Die beiden Kolbenverdichter 15 sind vorzugsweise gegenseitig in Serie geschaltet, können jedoch auch parallel geschaltet sein.

Der Kreuzkopf ist ölgeschmiert. Im Distanzteil 18a sind Ölabstreifer 17f angeordnet, welche die Kolbenstange 17e umschliessen. Das gemeinsame Gehäuse 18 ist über eine Ölzuführung 28 mit Schmieröl versorgt, und weist unten am Boden Auslässe auf, über welche das Öl über die Ölabführungen 29 wieder entnommen wird. Diese Ausgestaltung weist den Vorteil auf, dass unten im Gehäuse 18 kein permanent vorhandener Ölsumpf entsteht, da das Öl abgeführt wird.

Das Gehäuse 18 weist in seiner bevorzugtesten Ausführungsform sechs Kreuzköpfe 17c sowie entsprechend sechs Kolbenstangen 17e auf. Bevorzugt sind jeweils zwei der sechs in Verlaufsrichtung der Kurbelwelle 17a beabstandet angeordnete, mit der Kurbelwelle 17a über Schubstangen 17b verbundene Kreuzköpfe 17c bezüglich der Kurbelwelle 17a um einen Drehwinkel von 60° versetzt verbunden. In einer bevorzugten Ausgestaltung ist ein Kompensationsgewicht 19 mit dem Kreuzkopf 17c und/oder mit der Kolbenstange 17e verbunden. Bevorzugt ist das Kompensationsgewicht 19 derart gewählt, dass der jeweilige Kreuzkopf 17c, die dazugehörige Kolbenstange 17e, der damit verbundene Kolben 9a, 10a sowie das dazugehörige Kompensationsgewicht 19 im Wesentlichen dieselbe Masse aufweist. Diese Ausgestaltung mit Kompensationsgewicht 19 bewirkt, dass der Kompressor 2 während dem Betrieb eine grosse Laufruhe aufweist. Dies ist insbesondere von Vorteil wenn der Kompressor 2 auf einem Schiff wie einem LNG-Tanker betrieben wird, da im Schiff kein grosses und schweres Fundament vorhanden ist, über welches Vibrationskräfte abgeleitet werden könnten. Der erfindungsgemässe Kompressor 2 ist daher vorzugsweise derart ausgestaltet, dass dieser geringe angreifende Kräfte und Momente aufweist, und der Kompressor 2 daher zum Betrieb auf einem Schiff besonders gut geeignet ist. Der in Figur 4 dargestellte Kompressor 2 weist den Vorteil auf, dass dieser sehr kompakt gebaut ist und daher wenig Platz erfordert, und dass der Kompressor 2 mit einem einzigen, kompakt gebauten Elektromotor antreibbar ist.

Ein optimaler Ausgleich von Vibrationskräften ist mit der in Figur 4 dargestellten Anordnung umfassend ein gemeinsames Gehäuse 18 mit sechs in Verlaufsrichtung der Kurbelwelle 17a beabstandet angeordneten Kreuzköpfen 17c mit Schubstangen 17b und Kolbenstangen 17e erzielbar. Es kann sich jedoch als vorteilhaft erweisen den Kompressor 2 mit weniger als den in Figur 4 dargestellten Kolbenverdichtern 11, 12, 15 zu versehen, beispielsweise nur wie in Figur 1 dargestellt mit drei Kolbenverdichtern 11, 12 und 15. Bei diesem Ausführungsbeispiel würde der Kompressor 2 gemäss Figur 4, von links gesehen, nur den ersten und zweiten Kolbenverdichter 11, 12 sowie den vierten Kolbenverdichter 15 umfassen, wogegen das Distanzteil 18a an der Auflagefläche der dritten, fünften und sechsten Position mit einer Abschlussplatte versehen sein könnte, wobei die darunter liegende Kolbenstange 17e entsprechend verkürzt ausgestaltet ist, sodass diese die Abschlussplatte nicht berührt. Auch bei dieser Ausführungsform sind vorzugsweise alle sechs Kreuzköpfe 17c, Schubstangen 17b und Kolbenstangen 17e vorhanden, wobei die Kompensationsgewichte 19 vorzugsweise derart gewählt sind, dass jede der sechs beweglichen Anordnungen dieselbe Masse aufweist, was eine grosse Laufruhe mit geringen Vibrationen gewährleistet. Die in Figur 4 dargestellte Ausführungsform mit einer Kurbelwelle 17a mit sechs Kurbeln bewirkt, dass die angreifenden Kräfte relativ optimal ausgeglichen sind, sodass geringe Vibrationskräfte auftreten.

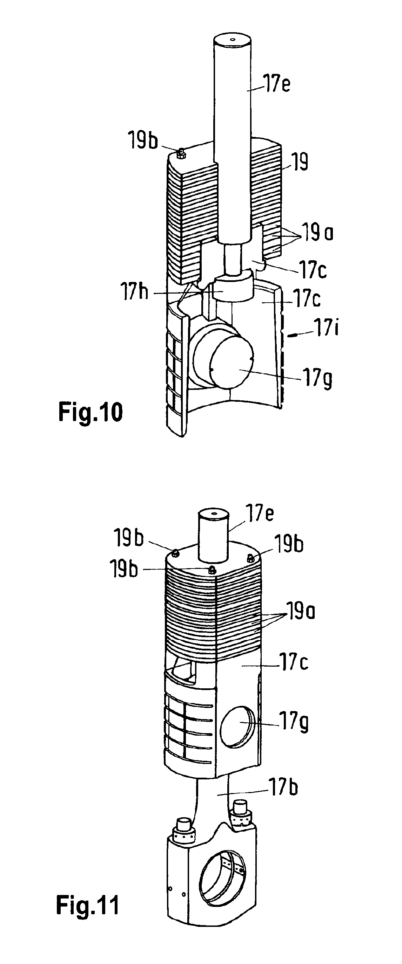

Die Figur 10 zeigt einen Längsschnitt durch einen Kreuzkopf 17c mit Kolbenstange 17e, Kreuzkopfzapfen 17g, Verbindungsmittel 17h und Führungsoberfläche 17i. Eine Ausgleichsmasse 19, bestehend aus einer Mehrzahl von Platten 19a und einem Verbindungsmittel 19b, ist fest mit dem Kreuzkopf 17c und/oder mit der Kolbenstange 17e verbunden. Die Ausgleichsmasse 19 kann auch irgendwo oberhalb des Kreuzkopfes 17c angeordnet ist, wobei die Ausgleichsmasse 19 vorzugsweise mit der Kolbenstange 17e verbunden ist. Figur 11 zeigt die in Figur 10 dargestellte Anordnung in einer Seitenansicht, wobei die Schubstange 17b über den Kreuzkopfzapfen 17g mit dem Kreuzkopf 17c verbunden ist. Die Ausgleichsmasse 19 könnte aus einem einzigen Teil bestehen. Vorzugsweise besteht die Ausgleichsmasse 19 jedoch aus einer Mehrzahl von Teilgewichten 19a, vorzugsweise aus geometrisch identisch ausgestalteten Teilgewichten 19a. In einer bevorzugten Ausgestaltung sind die Teilgewichte 19a, wie in den Figuren 10 und 11 dargestellt, plattenförmig ausgestaltet.

Bei dem in Figur 4 dargestellten Kompressor 2 sind alle Kompressionsstufen 9,10,13,14 beziehungsweise alle Kolbenverdichter 11,12,15 von derselben Kurbelwelle 17a angetrieben. Es ist jedoch auch möglich das Gehäuse 18 zu unterteilen in zwei separate Gehäuse, indem beispielsweise die ersten und zweiten Kompressionsstufen 9, 10 auf dem ersten Gehäuse angeordnet sind und die dritte und vierte Kompressionsstufe 13, 14 auf dem zweiten Gehäuse angeordnet sind. Alle Kompressionsstufen 9,10,13,14 könnten mit derselben Kurbelwelle 17a angetrieben sein. In einem weiteren Ausführungsbeispiel könnten jedoch auch zwei oder noch mehr getrennte Kurbelwellen 17a verwendet werden, welche zudem auch von separaten Antrieben wie Motoren angetrieben sein könnten.

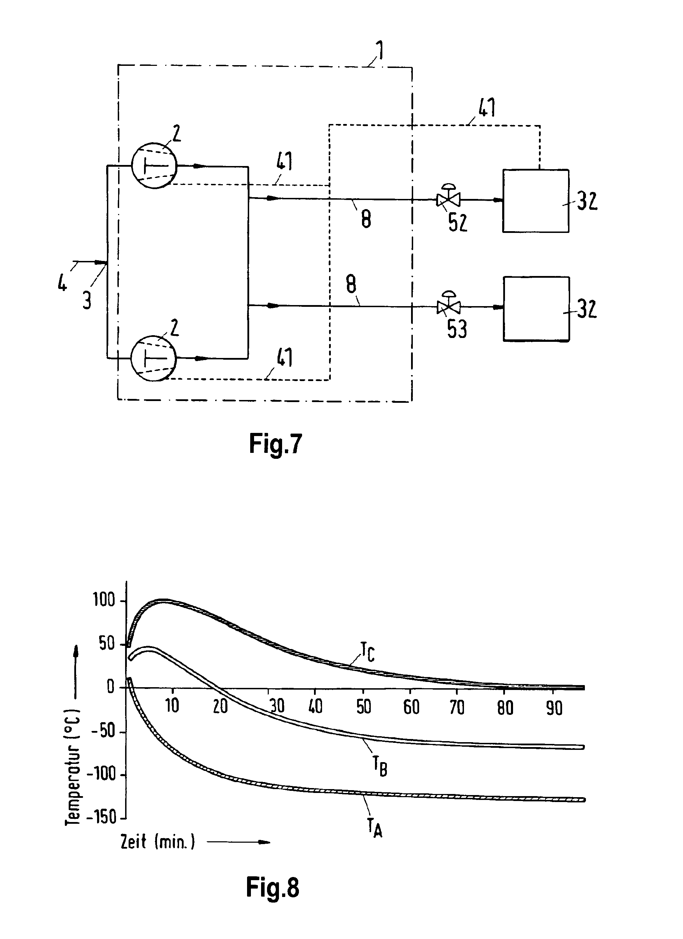

Figur 7 zeigt schematisch eine Anordnung mit zwei parallel angeordneten Kompressoren 2, denen über einen Einlass 3 ein Erdgasstrom 4 zugeführt wird, der aus Abdampfgas 6 besteht. Nach den Kompressoren 2 wird das verdichtete Erdgas in zwei Erdgasversorgungsleitungen 8 über ein Schliessventil 52, 53 dem jeweiligen Verbrennungsmotor 32 zugeführt, wobei der Verbrennungsmotor 32 beispielsweise ein Kolbenmotor wie ein Schiffsdieselmotor ist, der auch zum Betrieb mit Erdgas geeignet ist. Die Regelungsvorrichtung des Verbrennungsmotors 32 gibt einen Drucksollwert 41 für das zugeführte Erdgas vor, wobei dieser Drucksollwert 41 den beiden Kompressoren 2 als Sollwert zugeführt wird. Vorteilhafterweise wird der Verbrennungsmotor 32 derart betrieben, dass dieser über den Drucksollwert 41 einen bestimmten Gasdruck anfordert bei einer bestimmten Leistung. In einer besonders vorteilhaften Ausführungsform ist der Drucksollwert 41 das einzige Sollwertsignal für den in den Figuren 1 und 2 dargestellten Kompressor 2. Insbesondere ist die vom Verbrennungsmotor 32 geforderte Gasmenge nicht bekannt. Die erfindungsgemässe Vorrichtung sowie das erfindungsgemässe Verfahren ermöglichen es aus Abdampfgas 6 ein Erdgas mit einem bestimmten Druck und variabler Menge zur Verfügung zu stellen.

Der Labyrinth gedichtete Kolbenverdichter 11,12 weist den Vorteil auf, dass dieser in einem weiten Temperaturbereich zuverlässig betreibbar ist, insbesondere auch bei sehr tiefen Temperaturen und auch bei grösseren, auftretenden Temperaturveränderungen. Figur 8 zeigt nach dem Starten des Kompressors 2 den zeitlichen Verlauf TA der Temperatur des angesaugten Erdgases an der Saugseite der ersten Kompressionsstufe 9. Der zeitliche Verlauf TB zeigt die Temperatur des Erdgases an der Druckseite der ersten Kompressionsstufe 9. Der zeitliche Verlauf TC zeigt die Temperatur des Erdgases an der Druckseite der zweiten Kompressionsstufe 10. Aus dem dargestellten Ausführungsbeispiel ist ersichtlich, dass sich die Labyrinth gedichteten Kolbenverdichter 11,12 in einem Temperaturbereich zwischen -150°C und +100°C zuverlässig betreiben lassen. Der erfindungsgemässe Kompressor 2 weist zudem den Vorteil auf, dass dieser im Wesentlichen bei jeder auf der Saugseite anliegenden Temperatur gestartet werden kann.

Mit Hilfe der Figuren 1 bis 3 werden mögliche Betriebsverfahren im Detail beschrieben. Beim erfindungsgemässen Verfahren zum Bereitstellen von Erdgasbrennstoff für einen Verbrennungsmotor wird einem flüssiges Erdgas enthaltenden LNG-Speicherbehälter 5 Abdampfgas 6 entnommen. Daraufhin wird das Abdampfgas 6 in einer Kompressionsstufe 9,10 verdichtet, wobei die Kompressionsstufe 9,10 einen Labyrinth gedichteten Kolbenverdichter 11,12 umfasst. Danach wird das Erdgas in einer Kompressionsstufe 13,14 verdichtet, welche einen mit Kolbenringen oder mit Labyrinthen gedichteten Kolbenverdichter 15 umfassen. Dabei wird das Erdgas auf einen Druck zwischen 100 Bar und 500 Bar ,vorzugsweise zwischen 150 Bar und 300 Bar, verdichtet und danach an einem Auslass 7 bereitgestellt.

Der Labyrinth gedichtete Kolbenverdichter 11,12 bildet vorteilhafterweise eine erste und eine zweite Kompressionsstufe 9,10, und der Kolbenring gedichtete Kolbenverdichter 15 bildet vorzugsweise eine dritte und eine vierte Kompressionsstufe 13,14, sodass das Erdgas von vorzugsweise zumindest vier Kompressionsstufen 9,10,13,14 verdichtet wird, wobei die zweite Kompressionsstufe 10 in einer besonders vorteilhaften Ausgestaltung zwei in Serie geschaltete Verdichterstufen beziehungsweise Kolbenverdichter 12 aufweist.

Vorteilhafterweise wird das Erdgas nach der zweiten Kompressionsstufe 10 über ein Rückschlagventil 16 der dritten Kompressionsstufe 13 zugeleitet.

Vorteilhafterweise umfasst zumindest einer der Kolbenverdichter 11,12,15 einen Bypass 20,21,22, wobei das Erdgas derart über den zumindest einen Bypass 20,21,22 zurückgespeist wird, dass das Erdgas am Auslass 7 einen vorgegebenen Solldruckwert Psoll aufweist. Mit der in Figur 2 dargestellten Ausführungsform kann der Rückfluss in den Bypässen 20, 21, 22 derart angesteuert werden, dass der Enddruck am Auslass 7 in einem grossen Bereich von beispielsweise 100 Bar bis 500 Bar, vorzugsweise von 150 Bar bis 300 Bar variierbar ist, und dass die geförderte Menge Erdgas in einem grossen Bereich zwischen 0% und 100% variierbar ist, sodass der Kompressor 2 an der Druckseite am Auslass 7 einen variablen, über den Sollwert 41 vorherbestimmbaren Enddruck aufweist. Der erfindungsgemässe Kompressor 2 ist dank dem erfindungsgemässen Verfahren in der Lage den über den Sollwert 41 vorgegebenen Enddruck auch beizubehalten wenn der Verbrennungsmotor 32 variierende Mengen Erdgas bezieht. Abhängig von der jeweiligen Stellung der Ventile 23,24,25 kann eine Fördermenge im Bereich zwischen 0% und 100% über den jeweiligen Bypass 20,21,22 rezirkuliert werden. Die Möglichkeit die Fördermenge bis zu 0% zu reduzieren, beziehungsweise die Möglichkeit einer Rezirkulationsrate von 100% in einem Bypass 20,21,22 weist den Vorteil auf, dass der Kompressor 2 auch angetrieben werden kann wenn kein Erdgas dem Auslass 7 entnommen wird. Der Elektromotor, welcher die Kurbelwelle 17a des Kompressors 2 antreibt, steht, je nach Ausgestaltung, beispielsweise nur für eine bestimmte Anzahl Starts pro Zeiteinheit zur Verfügung. Beispielsweise könnte die während des Startens auftretende Erwärmung des Elektromotors die Anzahl Neustarts pro Stunde beschränken. Die Bypass 20,21,22 und die Ventile 23,24,25 ermöglichen es somit den Elektromotor weiter laufen zu lassen, auch wenn nur eine geringe Menge Erdgas oder sogar gar kein Erdgas dem Auslass 7 entnommen wird.

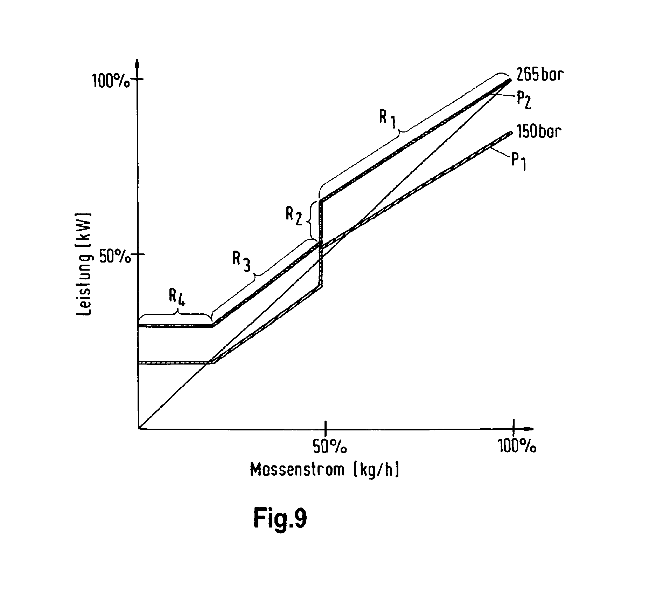

Figur 9 zeigt ein Regelkonzept zum Regeln von Druck und Massenstrom des komprimierten Erdgases am Ausgang 7. Im Detail zeigt die Figur 9 den prozentualen Massenstrom in kg/h in Funktion der an der Antriebswelle 27 anliegenden Leistung bei einem Druck P1 von 150 Bar und bei einem Druck P2 von 265 Bar. Das Regelkonzept wird mit Hilfe der Figur 2 und der Kurve P2 gemäss Figur 9 im Detail erklärt. Der mit R1 markierte Verlauf der Kurve P2 wird durch ein Verändern der Stellung des Ventils 23 erreicht, indem dadurch die Rückspeisungsrate im Bypass 20 verändert wird. Der mit R3 markierte Verlauf der Kurve P2 wird zudem durch ein Verändern der Stellung des Ventils 25 erreicht, indem dadurch die Rückspeisungsrate im Bypass 22 verändert wird. Der mit R4 markierte Verlauf der Kurve P2 wird zudem durch ein Verändern der Stellung des Ventils 24 erreicht, indem dadurch die Rückspeisungsrate im Bypass 21 verändert wird. Somit kann der Massenstrom beziehungsweise die Fördermenge Erdgas bei gleichbleibendem Druck am Auslass 7 zwischen 0% und 100% verändert werden. Dasselbe Regelverfahren gilt für andere Drücke, beispielsweise für die Kurve P1 mit einem Druck von 150 Bar. Nebst Schwankungen im Massenstrom kann die Anordnung gemäss Figur 2 auch Druckänderungen ausregeln. Die Regelvorrichtungen 40a, 40b, 40c sind vorteilhafterweise als P-I-Regler ausgestaltet. Angenommen es liegt an der Regelvorrichtung 40a ein Drucksollwert 41 an und der Druckistwert 42d sinkt unter den vorgegebenen Drucksollwert 41, dann würde die Regelvorrichtung 40a das Ventil 23 teilweise oder vollständig schliessen, sodass im Bypass 20 weniger Erdgas rückfliesst, was zur Folge hat, dass am Auslass 7 eine grössere Menge Erdgas zur Verfügung steht und der Druck des Erdgases am Auslass 7 ansteigt. Die Regelvorrichtung 40b erfasst zwei Istwerte 42a, 42b, einen Eingangsistwert 42a und einen Ausgangsistwert 42b.

Der Regelvorrichtung 40b sind zwei nicht dargestellte Sollwerte vorgegeben, ein Eingangssollwert und ein Ausgangssollwert. Wenn der Eingangsistwert 42a kleiner als der Eingangssollwert ist, dann wird das Ventil 24 geöffnet. Wenn der Ausgangssollwert kleiner ist als der Ausgangsistwert 42, dann wird das Ventil 24 ebenfalls geöffnet. Dasselbe Regelverfahren gilt auch für die Regelvorrichtung 40c und die dazugehörenden Sensoren und das Ventil 25.

Der Kompressor 2 und der Verbrennungsmotor 32 werden bevorzugt derart betrieben, dass der Verbrennungsmotor 32 einen Solldruckwert Psoll für das zuzuliefernde Erdgas vorgibt, und dass der Kompressor 2 derart geregelt wird, das das Erdgas am Auslass 7 den vorgegebenen Solldruckwert Psoll aufweist.

Es kann sich als vorteilhaft erweise, dass das Erdgas zumindest im ersten und zweiten Kolbenverdichter 11,12 ölfrei verdichtet wird.

Es kann sich als vorteilhaft erweisen, dass das Erdgas nach einer Kompressionsstufe 9,10,13,14 gekühlt wird.

Es kann sich als vorteilhaft erweisen, dass alle Kolbenverdichter 11,12,15 von einer gemeinsamen Kurbelwelle 17a angetrieben werden. Es kann sich jedoch auch als vorteilhaft erweisen, dass der Labyrinth gedichtete Kolbenverdichter 11,12 von einer ersten gemeinsamen Kurbelwelle 17a und der mit Kolbenringen abgedichtete Kolbenverdichter 15 von einer zweiten gemeinsamen Kurbelwelle angetrieben wird. Es kann sich als vorteilhaft erweisen, dass ein Teil des verdichteten Erdgases abgefackelt oder wieder verflüssigt wird. Es kann sich als vorteilhaft erweisen, dass zwischen der ersten und zweiten Kompressionsstufe 9,10 ein Zwischenkühler 31 zugeschaltet oder abgeschaltet wird.

## Patentansprüche

1. Vorrichtung (1) zum Bereitstellen von Erdgasbrennstoff umfassend einen Kompressor (2) mit einem Einlass (3) für einen Erdgasstrom (4), wobei der Einlass (3) Fluid leitend mit einem LNG-Speicherbehälter (5) verbindbar ist, um Abdampfgas (6) aus dem LNG-Speicherbehälter (5) zuzuführen, und einem Auslass (7) der Fluid leitend mit einer Erdgasversorgungsleitung (8) verbindbar ist, **dadurch gekennzeichnet dass** der Kompressor (2) eine erste und nachfolgend eine zweite Kompressionsstufe (9,10) umfasst, wobei die erste und die zweite Kompressionsstufe (9,10) als Labyrinth gedichtete Kolbenverdichter (11,12) oder als Kolbenring gedichtete Kolbenverdichter (15) ausgestaltet sind, und wobei die erste Kompressionsstufe (9) einen grösseren Kolbendurchmesser aufweist als die zweite Kompressionsstufe (10), wobei der Kompressor (2) nachfolgend zumindest eine dritte Kompressionsstufe (13,14) umfasst, welche als Kolbenring gedichteter Kolbenverdichter (15) oder als Labyrinth gedichteter Kolbenverdichter (11,12) ausgestaltet ist, und wobei zumindest eine der Kompressionsstufen (9,10,13,14) einen Bypass (20,21,22) mit einem ansteuerbaren Ventil (23,24,25) aufweist, um die Fördermenge und/oder den Förderdruck der Kompressionsstufe anzusteuern.

2. Vorrichtung nach Anspruch 1, **dadurch gekennzeichnet, dass** zwischen der zweiten Kompressionsstufe (10) und der dritten Kompressionsstufe (13) ein Rückschlagventil (16) angeordnet ist.

3. Vorrichtung nach einem der vorhergehenden Ansprüche, **dadurch gekennzeichnet, dass** alle Kompressionsstufen (9,10,13,14) von einem gemeinsamen Kurbeltriebwerk (17) angetrieben sind.

4. Vorrichtung nach einem der vorhergehenden Ansprüche, **dadurch gekennzeichnet, dass** alle Kompressionsstufen (9,10, 13,14) auf einem gemeinsamen Gehäuse (18) angeordnet sind.

5. Vorrichtung nach einem der vorhergehenden Ansprüche, **dadurch gekennzeichnet, dass** die dritte und eine vierte Kompressionsstufe (13,14) in einem gemeinsamen Zylinder (15a) angeordnet sind.

6. Vorrichtung nach einem der vorhergehenden Ansprüche, **dadurch gekennzeichnet, dass** die zweite Kompressionsstufen (10) aus zwei in Serie geschalteten Verdichterstufen besteht.

7. Vorrichtung nach einem der vorhergehenden Ansprüche, **dadurch gekennzeichnet, dass** alle vor dem Rückschlagventil (16) angeordneten Kompressionsstufen (9,10) ölfrei ausgestaltet sind.

8. Vorrichtung nach Anspruch 7, **dadurch gekennzeichnet, dass** zwischen dem Einlass (3) und dem Rückschlagventil (16) eine Rückspeiseleitung (50) angeordnet ist, zur Rückspeisung von Erdgas in den LNG-Speicherbehälter (5).

9. Verfahren zum Bereitstellen von Erdgasbrennstoff für einen Verbrennungsmotor, wobei einem flüssiges Erdgas enthaltenden LNG-Speicherbehälter (5) Abdampfgas (6) entnommen wird, wobei das Abdampfgas (6) in einer Kompressionsstufe (9,10) verdichtet wird, und wobei das Erdgas an einem Auslass (7) bereitgestellt wird, **dadurch gekennzeichnet, dass** die Kompressionsstufe (9,10), in welcher das Abdampfgas (6) verdichtet wird, aus einem Labyrinth gedichteten Kolbenverdichter (11,12) oder einem mit Kolbenringen gedichteten Kolbenverdichter (15) besteht, dass das Erdgas danach in einer Kompressionsstufe (13,14) verdichtet wird, welche aus einem mit Kolbenringen gedichteten Kolbenverdichter (15) oder aus einem Labyrinth gedichteten Kolbenverdichter (11,12) besteht, wobei das Erdgas auf einen Druck zwischen 100 Bar und 500 Bar verdichtet wird, insbesondere auf einen Druck zwischen 150 Bar und 300 Bar, dass zumindest einer der Kolbenverdichter (11, 12,15) einen Bypass (20,21,22) aufweist, und dass Erdgas derart über den zumindest einen Bypass (20,21,22) zurückgespeist wird, dass das Erdgas am Auslass (7) einen vorgegebenen Solldruckwert (Psoll) aufweist.

10. Verfahren nach Anspruch 9, **dadurch gekennzeichnet, dass** der Labyrinth gedichtete Kolbenverdichter (11,12) eine erste und eine zweite Kompressionsstufe (9,10) umfasst, und dass der Kolbenring gedichtete Kolbenverdichter (15) eine dritte und eine vierte Kompressionsstufe (13,14) umfasst, sodass das Erdgas zumindest in vier Kompressionsstufen (9,10,13,14) verdichtet wird.

11. Verfahren nach Anspruch 10, **dadurch gekennzeichnet, dass** das Erdgas nach der zweiten Kompressionsstufe (10) über ein Rückschlagventil (16) der dritten Kompressionsstufe (13) zugeleitet wird.

12. Verfahren nach Anspruch 9 bis 11, **dadurch gekennzeichnet, dass** das Erdgas nach dem Auslass (7) einem Verbrennungsmotor (32) zugeführt wird, und dass der Solldruckwert (Psoll) vom Verbrennungsmotor (32) vorgegeben wird.

13. Verfahren nach einem der Ansprüche 9 bis 12, **dadurch gekennzeichnet, dass** das Erdgas zumindest im ersten und zweiten Kolbenverdichter (11,12) ölfrei verdichtet wird und/oder dass das Erdgas nach einer Kompressionsstufe (9,10,13,14) gekühlt wird.

14. Verfahren nach einem der Ansprüche 9 bis 13, **dadurch gekennzeichnet, dass** alle Kolbenverdichter (11,12,15) von einer gemeinsamen Kurbelwelle (17a) angetrieben werden oder dass der Labyrinth gedichtete Kolbenverdichter (11,12) von einer ersten gemeinsamen Kurbelwelle (17a) und der mit Kolbenringen abgedichtete Kolbenverdichter (15) von einer zweiten gemeinsamen Kurbelwelle angetrieben wird.

15. Verfahren nach einem der Ansprüche 9 bis 14, **dadurch gekennzeichnet, dass** zwischen der ersten und zweiten Kompressionsstufe (9,10) ein Zwischenkühler (31) zugeschaltet oder abgeschaltet wird.

## Claims

1. Apparatus (1) for providing a supply of natural gas fuel comprising a compressor (2) having an inlet (3) for a stream of natural gas (4), wherein the inlet (3) may be placed in fluid communication with an LNG storage tank (5) in order to provide a supply of boil-off gas (6) from out of the LNG storage tank (5), and an outlet (7) which may be placed in fluid communication with a natural gas supply pipe (8), wherein the compressor (2) comprises a first and subsequently a second compression stage (9, 10), wherein the first and the second compression stage (9, 10) take the form of labyrinth-sealed piston-compressors (11, 12) or piston-ring-sealed piston-compressors (15), and wherein the first compression stage (9) features a larger piston diameter than the second compression stage (10), wherein the compressor (2) comprises at least a third subsequent compression stage (13, 14), which takes the form of a piston-ring-sealed piston-compressor (11, 12) or a labyrinth-sealed piston-compressor (15) and wherein at least one of the compression stages (9, 10, 13, 14) features a bypass (20, 21, 22) with a controllable valve (23, 24, 25) to access the delivery rate and/or the delivery pressure of the compression stage.

2. Apparatus according to claim 1, **characterised in that** there is a non-return valve (16) between the second compression stage (10) and the third compression stage (13).

3. Apparatus according to one of the preceding claims, **characterised in that** all of the compression stages (9, 10, 13, 14) are driven by a shared crank drive mechanism (17).

4. Apparatus according to one of the preceding claims, **characterised in that** all of the compression stages (9, 10, 13, 14) are mounted on a shared casing (18).

5. Apparatus according to one of the preceding claims, **characterised in that** the third and a fourth compression stage (13, 14) are in a shared cylinder (15a).

6. Apparatus according to one of the preceding claims, **characterised in that** the second compression stage (10) consists of two stages of compressors connected in series.

7. Apparatus according to one of the preceding claims, **characterised in that** all compression stages (9, 10) prior to the non-return valve (16) are oilless.

8. Apparatus according claim 7, **characterised in that** there is a returning pipe (50) between the inlet (3) and the non-return valve (16), for returning natural gas to the LNG storage tank (5).

9. Method for creating a supply of natural gas fuel for a combustion engine wherein the boil-off gas(6) is obtained from an LNG storage tank (5) containing liquefied natural gas, wherein the boil-off gas (6) is compressed in a compression stage (9, 10) and wherein the natural gas is made available at an outlet (7), **characterised in that** the compression stage (9, 10), in which the boil-off gas (6) is compressed, consisting of a labyrinth-sealed piston-compressor (11, 12) or a piston-compressor sealed by piston rings (15), that thereafter the natural gas is compressed in a compression stage (13, 14) consisting of a piston-compressor sealed by piston rings (15) or a labyrinth-sealed piston-compressor (11, 12), whereby the natural gas is compressed to a pressure of between 100 Bar and 500 Bar, particularly to a pressure of between 150 Bar and 300 Bar, that at least one of the piston-compressor (11, 12, 15) has a bypass (20, 21, 22), and that natural gas is returned via the at least one bypass (20, 21, 22) such that the natural gas) at the outlet (7) is at a required target pressure (Psoll).

10. Method according to claim 9 **characterised in that** the labyrinth-sealed piston-compressor (11, 12) comprises a first and a second compression stage (9, 10), and that the piston-ring-sealed piston-compressor (15) comprises a third and a fourth compression stage (13, 14) such that the natural gas is compressed in at least four compression stages (9, 10, 13, 14).

11. Method according to claim 10 **characterised in that**, after the second compression stage (10), the natural gas is fed to the third compression stage (13) via a non-return valve (16).

12. Method according to claims 9 to 11 **characterised in that**, after the outlet (7), the natural gas is fed to a combustion engine (32), and that the target pressure (Psoll) is as is required by the combustion engine (32).

13. Method according to one of claims 9 to 12 **characterised in that** the natural gas is compressed oillessly in at least the first and the second piston-compressors (11, 12) and/or that the natural gas is cooled after a compression stage (9, 10, 13, 14).

14. Method according to one of claims 9 to 13 **characterised in that** all of the piston-compressors (11, 12, 15) are driven by a shared crankshaft (17a) or that the labyrinth-sealed piston-compressor (11, 12) is driven by a first shared crankshaft (17a) and the piston-compressor sealed with piston rings (15) is driven by a second shared crankshaft.

15. Method according to one of claims 9 to 14 **characterised in that** an intercooler (31) is connected or disconnected between the first and second compression stage (9, 10).

## Revendications

1. Dispositif (1) de préparation de carburant au gaz naturel, comprenant un compresseur (2) qui présente une admission (3) dévolue à un flux (4) de gaz naturel, ladite admission (3) pouvant être raccordée à un récipient (5) d'accumulation de GNL, avec communication fluidique, de manière à délivrer du gaz d'évaporation (6) provenant dudit récipient (5) d'accumulation de GNL, et une sortie (7) pouvant être raccordée, avec communication fluidique, à un conduit (8) d'alimentation en gaz naturel, **caractérisé par le fait que** le compresseur (2) comporte des premier, puis deuxième étages de compression (9, 10), lesdits premier et deuxième étages de compression (9, 10) étant réalisés sous la forme de compresseurs (11, 12) à pistons dont l'étanchéité est assurée par des garnitures à labyrinthes, ou de compresseurs (15) à pistons dont l'étanchéité est assurée par des segments de pistons, et ledit premier étage de compression (9) offrant un plus grand diamètre de pistons que ledit deuxième étage de compression (10), sachant que ledit compresseur (2) est ensuite pourvu d'au moins un troisième étage de compression (13, 14) réalisé sous la forme de compresseurs (15) à pistons dont l'étanchéité est assurée par des segments de pistons, ou de compresseurs (11, 12) à pistons dont l'étanchéité est assurée par des garnitures à labyrinthes, et sachant qu'au moins l'un desdits étages de compression (9, 10, 13, 14) est muni d'une dérivation (20, 21, 22) équipée d'une vanne activable (23, 24, 25), en vue de piloter la quantité refoulée et/ou la pression de refoulement dudit étage de compression.

2. Dispositif selon la revendication 1, **caractérisé par le fait qu'**un clapet antiretour (16) est interposé entre le deuxième étage de compression (10) et le troisième étage de compression (13).

3. Dispositif selon l'une des revendications précédentes, **caractérisé par le fait que** tous les étages de compression (9, 10, 13, 14) sont entraînés par un mécanisme commun (17) d'entraînement par manivelles.

4. Dispositif selon l'une des revendications précédentes, **caractérisé par le fait que** tous les étages de compression (9, 10, 13, 14) sont situés sur un carter commun (18).

5. Dispositif selon l'une des revendications précédentes, **caractérisé par le fait que** le troisième, et un quatrième étage de compression (13, 14), sont logés dans un cylindre commun (15a).

6. Dispositif selon l'une des revendications précédentes, **caractérisé par le fait que** le deuxième étage de compression (10) est composé de deux étages compresseurs branchés en série.

7. Dispositif selon l'une des revendications précédentes, **caractérisé par le fait que** tous les étages de compression (9, 10) précédant le clapet antiretour (16) sont de réalisation exempte d'huile.

8. Dispositif selon la revendication 7, **caractérisé par le fait qu'**un conduit de retour (50) est interposé entre l'admission (3) et le clapet antiretour (16), en vue de réintroduire du gaz naturel dans le récipient (5) d'accumulation de GNL.

9. Procédé de préparation de carburant au gaz naturel destiné à un moteur à combustion interne, du gaz d'évaporation (6) étant prélevé d'un récipient (5) d'accumulation de GNL renfermant du gaz naturel liquéfié, ledit gaz d'évaporation (6) étant comprimé dans un étage de compression (9, 10), et le gaz naturel étant préparé au niveau d'une sortie (7), **caractérisé par le fait que** l'étage de compression (9, 10), dans lequel le gaz d'évaporation (6) est comprimé, est constitué d'un compresseur (11, 12) à piston dont l'étanchéité est assurée par des garnitures à labyrinthes, ou d'un compresseur (15) à piston dont l'étanchéité est assurée par des segments de piston ; **par le fait que** le gaz naturel est ensuite comprimé dans un étage de compression (13, 14) constitué d'un compresseur (15) à piston dont l'étanchéité est assurée par des segments de piston, ou d'un compresseur (11, 12) à piston dont l'étanchéité est assurée par des garnitures à labyrinthes, ledit gaz naturel étant comprimé jusqu'à une pression comprise entre 100 bar et 500 bar, notamment jusqu'à une pression comprise entre 150 bar et 300 bar ; **par le fait qu'**au moins l'un desdits compresseurs (11, 12, 15) à pistons est muni d'une dérivation (20, 21, 22) ; et **par le fait que** du gaz naturel est réintroduit par l'intermédiaire de ladite dérivation (20, 21, 22) à présence minimale, de telle sorte que ledit gaz naturel présente, au niveau de la sortie (7), une valeur de pression de consigne (Psoll) préétablie.

10. Procédé selon la revendication 9, **caractérisé par le fait que** le compresseur (11, 12) à piston, dont l'étanchéité est assurée par des garnitures à labyrinthes, comprend des premier et deuxième étages de compression (9, 10) ; et **par le fait que** le compresseur (15) à piston, dont l'étanchéité est assurée par des segments de piston, comprend des troisième et quatrième étages de compression (13, 14), de sorte que le gaz naturel est comprimé dans au moins quatre étages de compression (9, 10, 13, 14).

11. Procédé selon la revendication 10, **caractérisé par le fait que** le gaz naturel est dirigé vers le troisième étage de compression (13), après le deuxième étage de compression (10), par l'intermédiaire d'un clapet antiretour (16).

12. Procédé selon l'une des revendications 9 à 11, **caractérisé par le fait que** le gaz naturel est délivré à un moteur (32) à combustion interne, après la sortie (7) ; et **par le fait que** la valeur de pression de consigne (Psoll) est préétablie par ledit moteur (32) à combustion interne.

13. Procédé selon l'une des revendications 9 à 12, **caractérisé par le fait que** le gaz naturel est comprimé avec absence d'huile, au moins dans les premier et deuxième compresseurs (11, 12) à pistons ; et/ou **par le fait que** ledit gaz naturel est refroidi après un étage de compression (9, 10, 13, 14).

14. Procédé selon l'une des revendications 9 à 13, **caractérisé par le fait que** tous les compresseurs (11, 12, 15) à pistons sont entraînés par un arbre de manivelle (17a) commun ; ou **par le fait que** le compresseur (11, 12) à piston, dont l'étanchéité est assurée par des garnitures à labyrinthes, est entraîné par un premier arbre de manivelle (17a) commun, et le compresseur (15) à piston, dont l'étanchéité est assurée par des segments de piston, est entraîné par un second arbre de manivelle commun.

15. Procédé selon l'une des revendications 9 à 14, **caractérisé par le fait qu'**un refroidisseur intermédiaire (31) est mis additionnellement en circuit, ou mis hors circuit, entre les premier et deuxième étages de compression (9, 10).
